# EUROPEAN PATENT APPLICATION

(11) **EP 4 059 772 A1**
(43) Date of publication of application: **21.09.2022**
(21) Application number: 22161360.7
(22) Date of filing: 10.03.2022
(51) Int. Cl.: B60N 2/28, B60R 22/48, B60N 2/02

(54) **A CHILD VEHICLE SEAT**

(30) Priority: 15.03.2021 NL 2027751
(71) Applicant: Maxi Miliaan B.V., 5704 RD Helmond (NL)
(72) Inventor: Olfers, Dennis, 5595 AV Leende (NL)
(74) Representative: Veldman-Dijkers, Cornelia G. C.

(57) **Abstract**

A child vehicle seat comprises:
- at least a seat provided with a backrest and a seating part,
- a harness system to detachably connect a child to the seat, which harness system comprises at least two shoulder belts extending through the backrest,
- a tensioning device to tension the shoulder belts.

The tensioning device comprises at least one pulley shaped element along which the shoulder belts extend, whereby the at least one pulley shaped element being movable along the rear side of the backrest to tension the shoulder belts from a first position near an upper part to a second position near a lower part of the backrest.

## Description

### FIELD OF THE INVENTION

The invention relates to a child vehicle seat comprises:
- at least a seat provided with a backrest and a seating part,
- a harness system to detachably connect a child to the seat, which harness system comprises at least two shoulder belts extending through the backrest,
- a tensioning device to tension the shoulder belts, which tensioning device comprises at least one pulley shaped element along which the shoulder belts extend, whereby the at least one pulley shaped element being movable along the rear side of the backrest to tension the shoulder belts from a first position near an upper part to a second position near a lower part of the backrest.

### BACKGROUND OF THE INVENTION

A child vehicle seat known from DE20209601U1 comprises an upper belt deflection element through which the upper belt extends. The upper belt deflection element is connected to a central tensioning belt extending from a rear side of the child vehicle seat to a front side thereof. By pulling at the front side on the central tensioning belt with a certain force, the upper belt deflection element is being moved over a certain distance, whereby the upper belts forming upper shoulder belts are being moved over twice said distance by half said force.

One of the disadvantages is that the tensioning device is located under the seating part, which space is often needed for other purposes as well like for means to recline the seat, to rotate the seat about a vertical axis, means for energy dissipation during an impact, etc.

### SUMMARY OF THE INVENTION

At least one of the objects of the invention is to provide a child vehicle seat with an improved and easier operating tensioning device.
This object is accomplished with the child vehicle seat according to the invention in that that the at least one pulley shaped element is linearly movable by means of a spindle, a toothed rack, a lift or the like driven by means of a motor like an electric motor.

A spindle, a toothed rack, a lift or the like are suitable devices for moving the at least one pulley shaped element in a controlled and constant manner over a linear path from the first position near an upper part to the second position near a lower part of the backrest and vice versa. Such devices can easily be positioned at the rear side of the backrest. Driving and moving the at least one pulley shaped element is movable by means of a motor like an electric motor makes it very easy for a caretaker installing a child in the seat to adjust the tension of the shoulder belts.

Since the whole tensioning device is located at the rear of the backside it does not hinder other features located under the seating portion. Furthermore the dimensions of such a tensioning device are relatively small compared to the known tensioning device.

Ends of the shoulder belts are located on the rear side of the backrest. When moving the at least one pulley shaped element away from the position of the ends of the shoulder belts, the at least one pulley shaped element will be pushed against the shoulder belts which will be rerouted in a direction away from the ends of the shoulder belts and be folded double. This has the advantage that when the at least one pulley shaped element is being moved over a certain distance that the shoulder belts will be moved over twice said certain distance. In this manner the height of the backrest is enough to enable to hide the tensioning device from view from the front side of the seat and the available space behind the backrest can cover the distance needed to be used for a smallest and a biggest child.

Preferably, the position on the backrest where the two shoulder belts extend through the backrest is adjustable to the size of the child.

Preferably a headrest is movable simultaneously with the adjustable shoulder belts.

Preferably the position of the ends of the shoulder belts with respect to the seat is located at the same height or higher than the highest position on the backrest where the two shoulder belts extend through the backrest. In this manner the at least one pulley shaped element will always reroute the shoulder belts in a direction away from the ends of the shoulder belts when moving from the first position near an upper part to the second position near a lower part of the backrest and vice versa.

It has to be noticed that by a child vehicle seat known from US22160059745A1, the tensioning device to tighten the safety harness automatically comprises an air pump to pressurize air cylinders which apply force to a tension roller which presses against the manual tightening strap.

One of the disadvantages is that the tensioning device is located under the seating part, which space is often needed for other purposes as well like for means to recline the seat, to rotate the seat about a vertical axis, means for energy dissipation during an impact, etc.

Another disadvantage of this known tensioning device is that the stroke of the arm supporting the tension roller is relatively small so that it can only be used for a finely adjust of the tension after a user has manually pulled the manual tightening strap for a quick, coarse adjustment thereof.

Another disadvantage of this known tensioning device is that the air pump and air cylinders require a lot of space.

A further disadvantage is that during an impact the air will be compressed, resulting in extension of the shoulder belts. Compressed air is also is sensitive to temperature so the tension of the shoulder belt could vary when the temperature in the environment changes, resulting in higher or lower tension.

An embodiment of the child vehicle seat according to the invention is characterized in that the seating part of the seat comprises a buckle, wherein the shoulder belts are detachable connectable to the buckle, wherein the buckle comprises a detector to detect the connection of the shoulder belts with the buckle and to at least activate the motor of the tensioning device when the shoulder belts are connected with the buckle.

Although the motor can be activated by pushing on an external button or a signal from a computer application, it is much easier that the motor is automatically activated when the when the shoulder belts are connected with the buckle. Normally this is a sign that a child is positioned in the seat and the exact moment that the shoulder belts will need to be tensioned. When the motor is activated the at least one pulley shaped element will be moved downwardly from the first position near the upper part to the second position near the lower part of the backrest, preferably until a predetermined tension has been reached.

As soon as the shoulder belts are disconnected from the buckle, the motor can be activated to move the at least one pulley shaped element upwardly from the second position near the lower part to the first position near the upper part of the backrest, so that it is ready for the next time when a child will be installed in the seat.

Another embodiment of the child vehicle seat according to the invention is characterized in that the tensioning device comprises at least one detector to detect that the at least one pulley shaped element has reached an end position and to at least de-activate the motor of the tensioning device when the end position has been reached.

This prevents the motor from running when a movement of the at least one pulley shaped element is no longer possible.

Another embodiment of the child vehicle seat according to the invention is characterized in that the tensioning device comprises a detector to detect that a predetermined tension of the shoulder belts has been achieved.

The detector may warn a user that the motor must be switched off but more preferably automatically switch off the motor. This prevents too much tension on the shoulders of the child and guarantees that the child is firmly fixed into the seat.

Another embodiment of the child vehicle seat according to the invention is characterized in that the predetermined tension is determined by a deformable spring being deformable to a certain predetermined level.

The detector for detecting that a predetermined tension of the shoulder belts has been achieved, will detect when the deformable spring is deformed to the certain predetermined level. Such deformable spring provides a simple means to control the tension on the shoulder belts.

Another embodiment of the child vehicle seat according to the invention is characterized in that when the predetermined tension of the shoulder belts have been achieved, the motor is de-activated.

This prevents in an easy manner that too much tension will be exerted on the shoulders of the child.

Another embodiment of the child vehicle seat according to the invention is characterized in that the tensioning device comprises at least a first and a second movable pulley shaped element and at least one third pulley shaped element having a fixed position with respect to the seat, wherein the shoulder belts is guided along the first movable pulley shaped element, the third fixed pulley shaped element and a second movable pulley shaped element.

When more than one pulley shaped element is being used a movement of the movable pulley shaped elements over a certain distance will result in a movement of the shoulder belts over distance being a multiple of the certain distance. In this manner the movement of the pulley shaped elements can be limited whilst still being able to move the shoulder belts over a relatively large distance.

Another embodiment of the child vehicle seat according to the invention is characterized in that the first and the second movable pulley shaped elements are simultaneously movable.

In this manner only one motor to move both pulley shaped elements is needed.

Another embodiment of the child vehicle seat according to the invention is characterized in that the seat comprises a toothed rack on the backrest and a movable shoulder belt adjustment device comprising a pivotable spring loaded locking device being pivotable against spring force from an unlocked position to a locking position in the toothed rack when a predetermined tension is applied on the shoulder belts.

The position of the shoulder belts can be adjusted independently from the tensioning device by means of a movable shoulder belt adjustment device. However, preferably the movable shoulder belt adjustment device is being moved downwardly by the shoulder belts, when tensioning the shoulder belts by the tensioning device. As soon as the predetermined tension is applied on the shoulder belts, the spring loaded locking device locks in a locking position in the toothed rack.

Another embodiment of the child vehicle seat according to the invention is characterized in that the at least one pulley shaped element is manually movable.

Although movement of the at least one pulley shaped element by means of a motor is preferred and more convenient for a caretaker, being able to move the at least one pulley shaped element also manually is possible, for example in case the energy source like a battery for the motor is empty.

### BRIEF DESCRIPTION OF THE DRAWINGS

The child vehicle seat according to the invention will further be explained with reference to the drawings, wherein,
figure 1 is a schematic view of a first embodiment of the child vehicle seat according to the invention with a movable shoulder belt adjustment device in a lower position and a pulley shaped element in an upper position,
figure 2 is a schematic view of the first embodiment of the child vehicle seat as shown in figure 1 with the movable shoulder belt adjustment device in an upper position and the pulley shaped element in the upper position,
figure 3 is a schematic view of the first embodiment of the child vehicle seat as shown in figure 1 during tensioning the shoulder belts,
figure 4 is a schematic view of the first embodiment of the child vehicle seat as shown in figure 1 when the shoulder belts have been tensioned to the predetermined tension,
figures 5-9 are schematic views of different means for moving the pulley shaped element,
figure 10 is a schematic view of a second embodiment of the child vehicle seat according to the invention with two movable pulley shaped elements,
figures 11-13 are different schematic views of a third embodiment of the child vehicle seat according to the invention.

In the drawings, like reference numerals refer to like elements.

### DESCRIPTION OF PREFERRED EMBODIMENTS

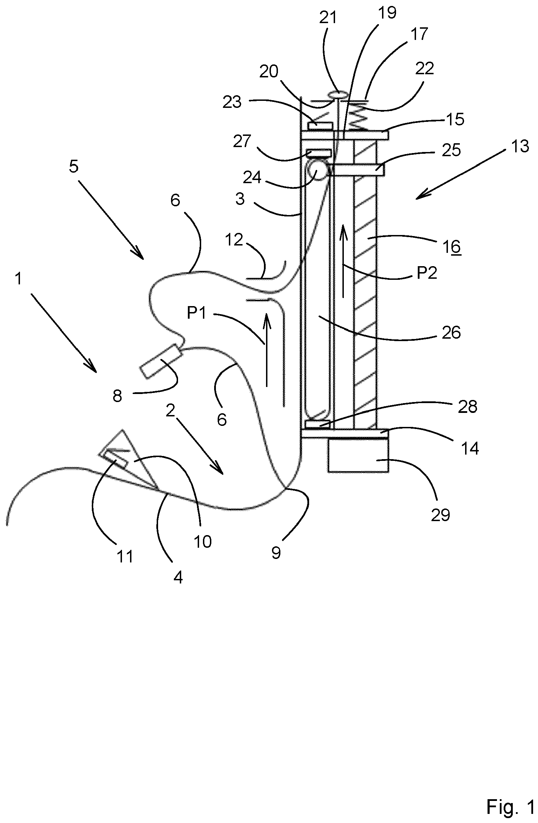

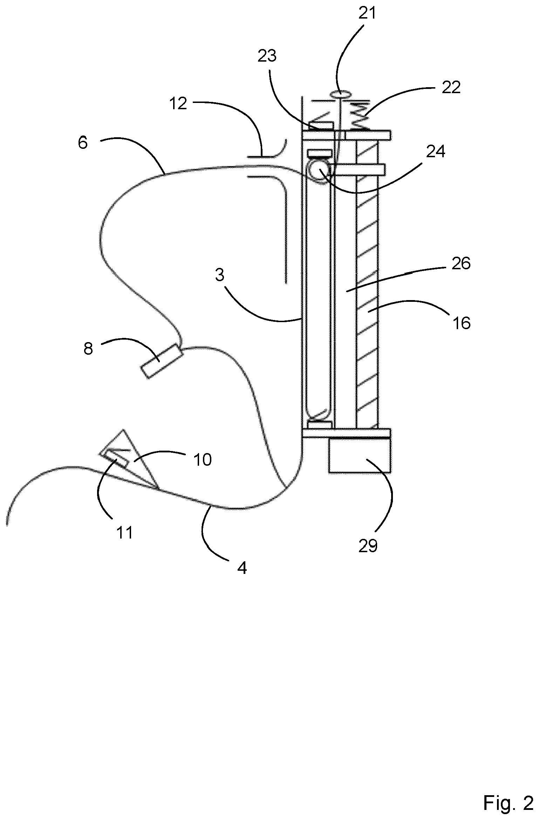

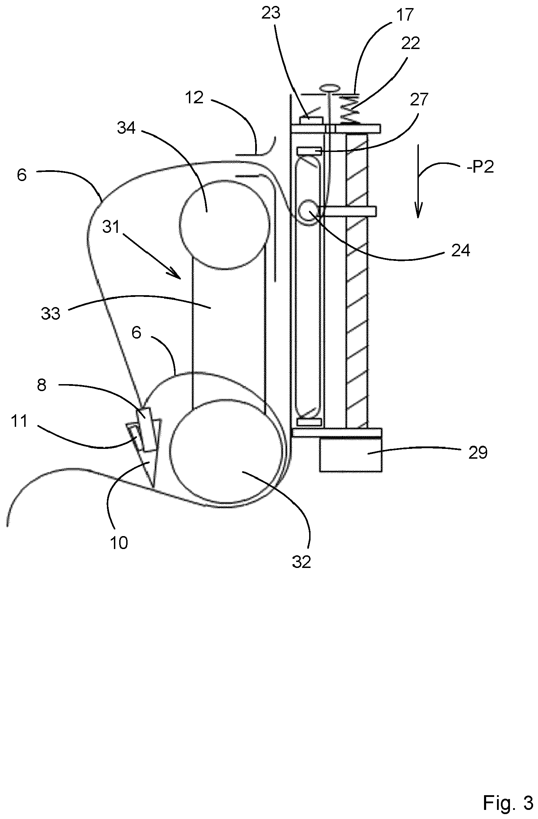

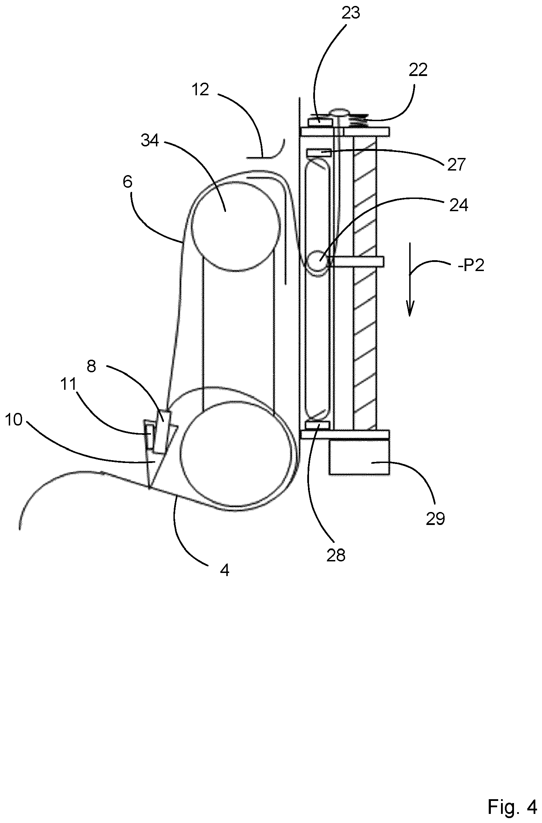

Figures 1-4 show schematic views of a first embodiment of the child vehicle seat 1 according to the invention. The child vehicle seat 1 comprises a seat 2 provided with a backrest 3 and a seating part 4. The seat 2 comprises a harness system 5 to detachably connect a child to the seat 2, which harness system 5 comprises at least two shoulder belts 6 extending through a slot (not shown) in the backrest 3, which shoulder belts 6 are guided on a front side (being the side where the child will be seated) through a connecting element 8 to a location 9 of the seat 2 near the transition of the backrest 3 and the seating part 4. The parts of the shoulder belts 6 located between the connecting element 8 and the location 9 will be called hip belts. The seating part 4 of the seat 2 comprises a buckle 10 cooperating with the connecting element 8 to detachable connect the shoulder belts 6 and the hip belts to the buckle 10. The buckle 10 comprises a first detector 11 to detect the connection of the shoulder belts 6 with the buckle 10. As can be seen in the figures 1 and 2, a switch of the detector 11 is open whilst in the figures 3 and 4, the switch of the detector 11 is closed.

The seat 2 comprises a shoulder belt adjustment device 12 being movable in and opposite to the direction as indicated by arrow P1.

The seat 2 also comprises a tensioning device 13 for tensioning the shoulder belts 6, which tensioning device 13 is located on the rear side of the backrest 3. The rear side of the backrest 3 is the side being remote of the front side. The tensioning device 13 comprises two supports 14, 15 connected at a lower part and an upper part of the backrest 3. A spindle 16 extends between the supports 14, 15. The spindle 16 is rotatable supported on both ends by the supports 14, 15. Above the support 15 an element 17 is located. Both the upper support 15 and the element 17 are provided with passages 19, 20 through which the shoulder belts 6 extend. Above the element 17 ends of the shoulder belts 6 are provided with an enlarged part 21 keeping the ends of the shoulder belts 6 connected to the element 17. Between the element 17 and the upper support 15 a spring 22 and a detector 23 are located. As can be seen in the figures 1, 2 and 3, a switch of the detector 23 is open whilst in figure 4, the switch of the detector 23 is closed.

The tensioning device 13 further comprises a pulley shaped element 24 connected to a support 25. The shoulder belts 6 extend along the pulley shaped element 24. At a side remote of the pulley shaped element 24 the support 25 is provided with a threaded passage cooperating with the thread of the spindle 16. In this manner by rotating the spindle 16 about its longitudinal axis, the support 25 and the pulley shaped element 24 are movable in and opposite to the direction as indicated by arrow P2.

The pulley shaped element 24 is guided in a longitudinal slot 26 extending parallel to the spindle 16. On the upper side and lower side of the longitudinal slot 26 detectors 27, 28 are located. If the pulley shaped element 24 is located at the upper side of the longitudinal slot 26, the switch of the detector 27 is closed. If the pulley shaped element 24 is located at the lower side of the longitudinal slot 26, the switch of the detector 28 is closed.

The tensioning device 13 further comprises an electric motor 29 for driving the spindle 16. The motor 29 and the detectors 11, 23, 27, 28 are connected to a power source, for example a battery.

The working principle of the child vehicle seat 1 will now be explained with reference to the figures 1-4.

A caretaker will manually adjust the shoulder belt adjustment device 12 to the required height of the shoulder belts 6 with respect to the seat 2 by moving the shoulder belt adjustment device 12 for example from a lower position as shown in figure 1 to a higher position as shown in figure 2. In the desired position the shoulder belt adjustment device 12 will be locked with respect to the backrest 3. Mechanisms to do so are well known in the art and will not be further explained. The connecting element 8 will not be connected to the buckle 10 yet and the switch of the detector 11 is open.

The pulley shaped element 24 will be in its initial position near the upper side of the upper side of the longitudinal slot 26, whereby the switch of the detector 27 is being closed. The switches of the detectors 23, 28 are open.

The caretaker will place the child 31 in the seat 2. In the figures the child 31 is schematically shown as having legs 32, a body 33 and shoulders 34. No head is being shown. After placing the child 31 in the seat 2 and positioning the shoulder belts 6 on the shoulders 34 and the hip parts thereof around the legs 32, the caretaker will connect the connecting element 8 to the buckle 10. By doing so the switch of the detector 11 will be closed. The detector 11 can be either directly coupled to the motor 29 or be connected to a controller of the motor 29, whereby in both cases closing of the switch of the detector 11 will result in activating the motor 29 to move the pulley shaped element 24 downwardly in a direction indicated by arrow -P2. The pulley shaped element 24 will be pushed against the shoulder belts 6 which will be rerouted in a direction away from the ends of the shoulder belts and folded double as can be seen in the figures 3 and 4.

As can be seen in figure 3, the shoulder belts 6 have a lot of play with respect to the shoulders 34 of the child 31. The switch of detector 27 is being opened. The spring 22 is still in its initial non-compressed position. By moving the pulley shaped element 24 further downwardly in a direction indicated by arrow -P2, the tension of the shoulder belts 6 will increase, whereby at a certain force the spring 22 will start to be compressed.

As can be seen in figure 4, the pulley shaped element 24 has been moved further downwardly in a direction indicated by arrow -P2, whereby the spring 22 is being compressed to a predetermined level at which level the switch of detector 23 will get closed. The detector 23 can be either directly coupled to the motor 29 or be connected to a controller of the motor 29, whereby in both cases closing of the switch of the detector 23, will overrule the detector 11 and will result in deactivating the motor 29. The shoulder belts 6 will now be placed at a predetermined tension against the shoulders 34 of the child 31.

If the child 31 moves within the seat 2, whereby the shoulders 34 of the child 31 will be moved downwardly, the tension on the shoulder belts 6 will reduce, the spring 22 will push the element 17 away from the upper support 15 and the switch of the detector 23 will be opened. By opening the switch of the detector 23, the motor 29 will be activated again and will move the pulley shaped element 24 again downwardly until the spring 22 is again being compressed to the predetermined level at which level the switch of detector 23 will get closed again and the motor 29 will be de-activated again. It is possible to use a controller of the motor 29 to prevent such additional tensioning.

If the caretaker wants to remove the child from the seat 2, the connecting element 8 is being disconnected from the buckle 8. The motor 29 will be activated and will move the pulley shaped element 24 upwardly in the direction as indicated by arrow P2 to its upmost initial position as shown in figure 1. When the pulley shaped element 24 is in the upmost initial position the switch 24 will be closed and the motor 29 will be de-activated.

In case that the no child 31 is present in the seat 2 but the connecting element 8 is connected to the buckle 10, the switch of the detector 11 will be closed the motor 29 will be activated to move the pulley shaped element 24 downwardly in a direction indicated by arrow -P2 until the switch of the detector 28 will be closed. The detector 28 can be either directly coupled to the motor 29 or be connected to a controller of the motor 29, whereby in both cases closing of the switch of the detector 28, will overrule the detector 11 and will result in deactivating the motor 29.

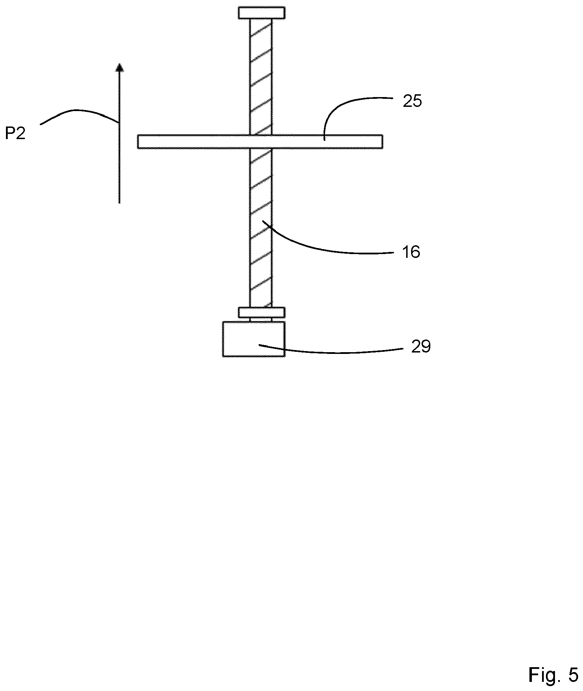

Figures 5-9 show different means for moving the pulley shaped element 24 connected to the support 25 in and opposite to the direction as indicated by arrow P2.

Figure 5 shows the spindle 16, the support 25 being provided with a threaded passage cooperating with the thread of the spindle 16 and the motor 29 of the embodiment as shown in figures 1-4. The pitch of the thread of the spindle 16 will ensure the spindle 16 cannot rotate by force on the pulley shaped element 24, for example during a car crash.

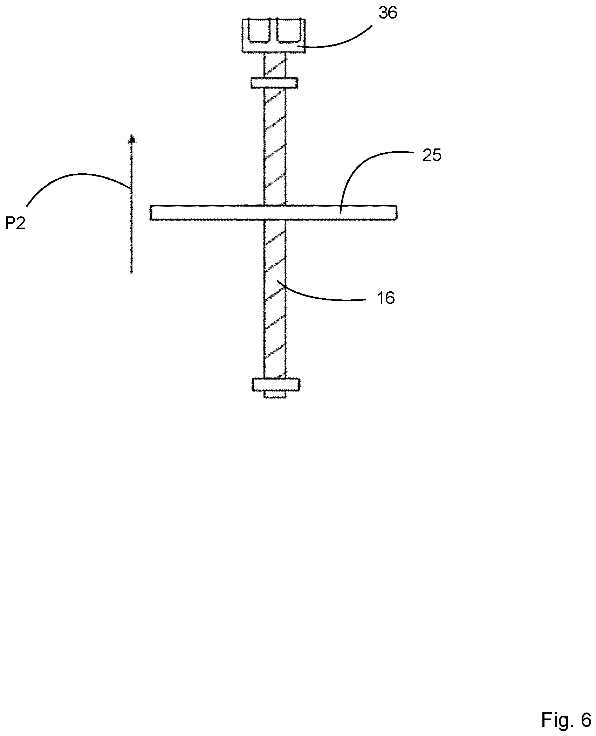

Figure 6 shows the spindle 16, the support 25 being provided with a threaded passage cooperating with the thread of the spindle 16 and a knob 36 for manually rotating the spindle 16. The knob 36 is accessible from the top of the backrest 3. The pitch of the thread of the spindle 16 will ensure the spindle 16 cannot rotate by force on the pulley shaped element 24, for example during a car crash.

It is also possible to have both the motor 29 and the knob 36, whereby the knob 36 is only needed if due to for example a power failure the motor 29 does no longer functions.

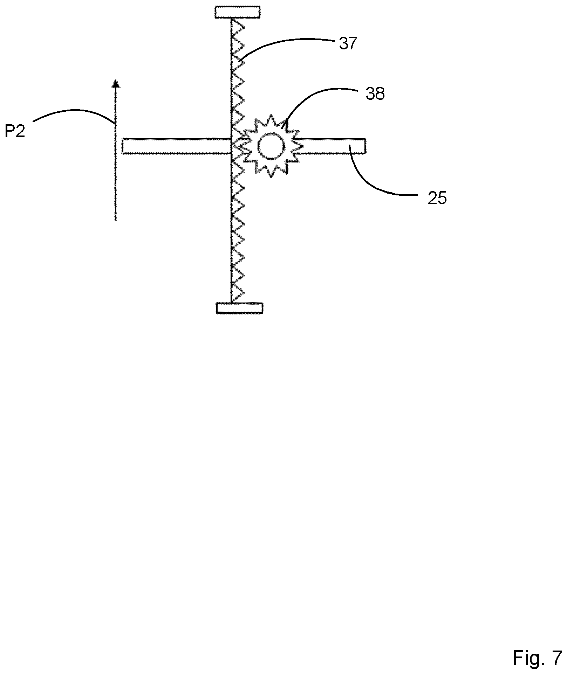

Figure 7 shows a toothed rack 37 and a gear wheel 38 rotatably connected to the support 25. By rotating the gear wheel 38, the support 25 will be moved in and opposite to the direction as indicated by arrow P2.

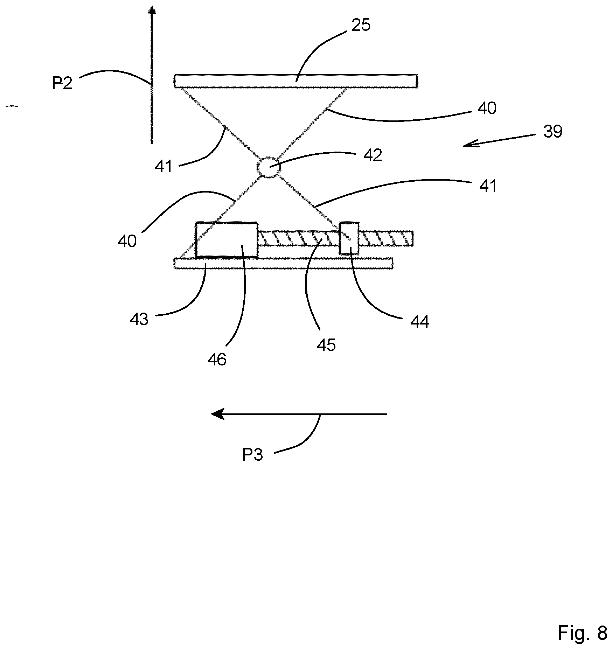

Figure 8 shows a lift 39 for moving the support 25 in and opposite to the direction as indicated by arrow P2. The lift 39 comprises to arms 40, 41 being pivotably connected at each other at pivot 42. First ends of the arms 40, 41 are pivotable connected to the support 25. A second end of the first arm 40 is fixed to a base 43. A second end of the second arm 40 is connected to a screw 44 being movable along a spindle 45 by means of a motor 46. Moving the screw 44 in and opposite the direction as indicated by arrow P3, will result in moving the support 25 in and opposite to the direction as indicated by arrow P2.

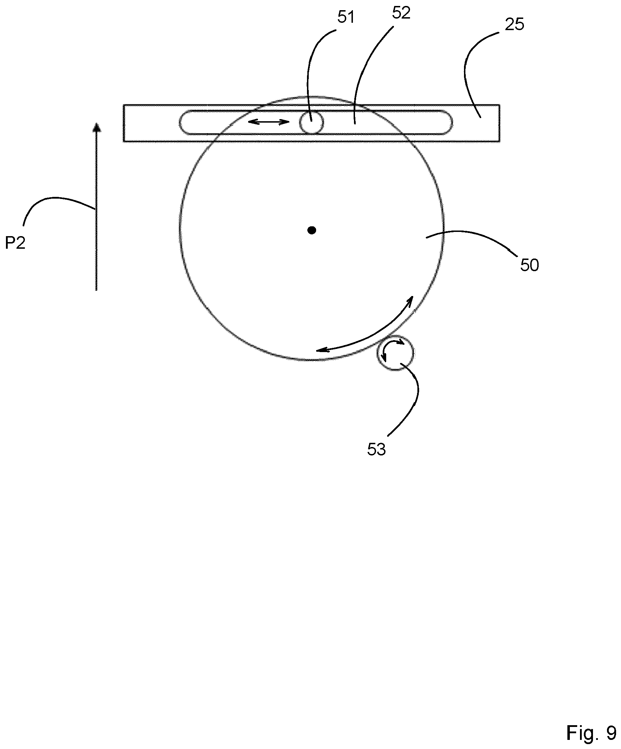

Figure 9 shows a relatively large gearwheel 50 provided with a pin 51, the support 25 provided with a slot 52 wherein the pin 51 is slideably located, and a relatively small gearwheel 53 cooperating with the relatively large gearwheel 50. Rotating of the relatively small gearwheel 53 either powered by motor or manual driven will rotate the relatively large gearwheel 50, whereby the pin 51 will be moved in a horizontal direction in the slot 52 and in a vertical direction in and opposite to arrow P2, due to which also the support 25 will be moved in the vertical direction.

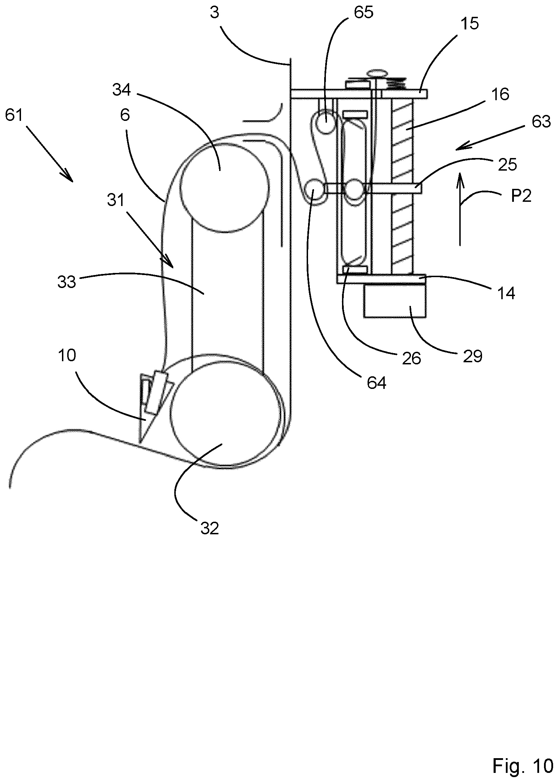

Figure 10 shows a schematic view of a second embodiment of the child vehicle seat 61 according to the invention. The child vehicle seat 61 differs from the child vehicle seat 1 in that the tensioning device is different. The tensioning device 63 of the child vehicle seat 61 comprises next to the same elements as tensioning device 13, second movable pulley shaped element 64 supported by the same support 25 as the first movable pulley shaped element 24. In this manner the first and the second movable pulley shaped elements 24, 64 are simultaneously movable.

The tensioning device 63 of the child vehicle seat 61 also comprises a third pulley shaped element 65 supported by the upper support 15. Seen from the side of the child 31, the shoulder belts 6 are guided along the second movable pulley shaped element 64, the third fixed pulley shaped element 64 and the first movable pulley shaped element 24. When moving the support 25 in a direction opposite arrow P2 over a certain distance, the shoulder belts 6 will be pulled through the backrest 3 over a distance being four times the certain distance.

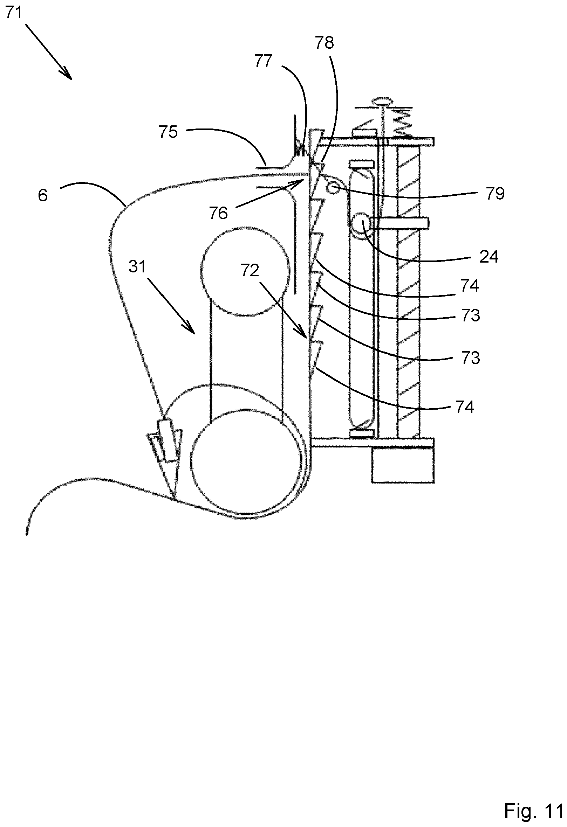

Figures 11-12 show a schematic view of a third embodiment of the child vehicle seat 71 according to the invention.

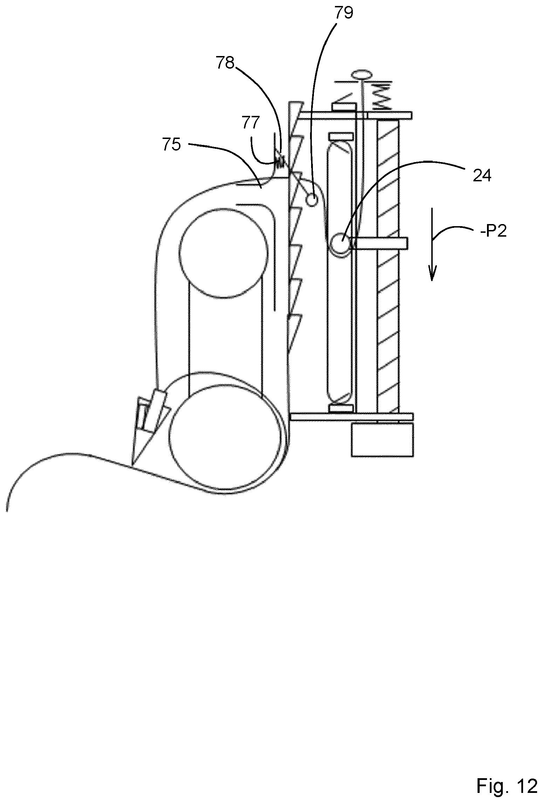

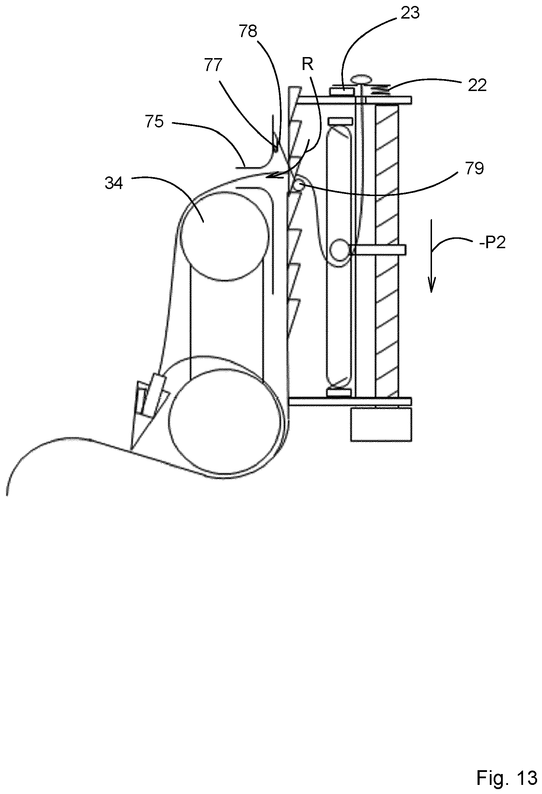

The child vehicle seat 71 differs from child vehicle seat 1 in that the backrest 3 comprises on its rear side a toothed rack 72 provided with a number of teeth 73 and spaces 74 between the teeth 73. The movable shoulder belt adjustment device 75 comprises a pivotable spring loaded locking device 76 provided with a spring 77, a pivotable arm 78 and a locking member 79. The arm 78 with the locking member 79 is pivotable against spring force of spring 77 in the direction as indicated by arrow R from an unlocked position as shown in the figures 11 and 12 to a locking position as shown in the figure 13 wherein the locking member 79 is located in one of the spaces 74 between the teeth 73 in the toothed rack 72 when the tension predetermined by spring 22 is applied on the shoulder belts 6.

The shoulder belt adjustment device 75 will automatically move downwardly when tensioning the shoulder belts 6. In this manner a caretaker does not need to adjust the height of the shoulder belt adjustment device 75 separately. The locking device 76 has the advantage that a slight downward movement of the shoulders 34 of the child 31 and thus a slight reduction of the tension of the shoulder belts 6 will trigger the detector 23 to activate the motor 29 but will not cause a downward movement of the shoulder belt adjustment device 75. Only if the reduction of the tension of the shoulder belts 6 is such that the locking member 79 will be fully moved under the force of spring 77 and out of the spaces 74 between the teeth 73, the shoulder belt adjustment device 75 will also be moved.

It is also possible to move the shoulder belt adjustment device 12 or 75 with the force exerted on the shoulder belts 6 during tensioning thereof but without using the locking device 76.

It is also possible to use other means than the slot 26 to guarantee a linear movement of the pulley shaped element 24.

It is also possible to use more than two movable pulley shaped elements along which the shoulder belts extend.

It is also possible to determine the predetermined tension by means of a pressure sensor, strain gauge, a spring pushing at a rear of the backrest 3 to the shoulder belts, a sensor located in the buckle, a sensor located at location 9 of the seat 2 near the transition 9 of the backrest 3 and the seating part 4 or other suitable means.

It is also possible to let the desired tensioning in the shoulder belts 6 depend on the size or weight of the child, the kind of clothing the child is wearing, whether the seat in in a reclined position or upright position etc.

Although the invention is shown with a so-called 5-point belt system, it is also possible to use it with a so-called 3-point belt system.

### LIST OF REFERENCES

- 1: child vehicle seat
- 2: seat
- 3: backrest
- 4: seating part
- 5: harness system
- 6: shoulder belt
- 8: connecting element
- 9: location
- 10: buckle
- 11: first detector
- 12: shoulder belt adjustment device
- 13: device
- 14: support
- 15: support
- 16: spindle
- 17: element
- 19: passage
- 20: passage
- 21: enlarged part
- 22: spring
- 23: detector
- 24: pulley shaped element
- 25: support
- 26: slot
- 27: detector
- 28: detector
- 29: electric motor
- 31: child
- 32: legs
- 33: body
- 34: shoulders
- 36: knob
- 37: toothed rack
- 38: gear wheel
- 39: lift
- 40: arm
- 41: arm
- 42: pivot
- 43: base
- 44: screw
- 45: spindle
- 46: motor
- 50: gearwheel
- 51: pin
- 52: slot
- 53: gearwheel
- 61: child vehicle seat
- 63: device
- 64: pulley shaped element
- 65: pulley shaped element
- 71: child vehicle seat
- 72: toothed rack
- 73: teeth
- 74: space
- 75: shoulder belt adjustment device
- 76: locking device
- 77: spring
- 78: arm
- 79: locking member
- P1: arrow
- P2: arrow
- P3: arrow
- R: arrow

## Claims

1. A child vehicle seat (1, 61, 71) comprises:
- at least a seat (2) provided with a backrest (3) and a seating part (4),
- a harness system (5) to detachably connect a child to the seat (2), which harness system (5) comprises at least two shoulder belts (6) extending through the backrest (3),
- a tensioning device (13, 63) to tension the shoulder belts (6), which tensioning device (13, 63) comprises at least one pulley shaped element (24, 64) along which the shoulder belts (6) extend, whereby the at least one pulley shaped element (24, 64) being movable along the rear side of the backrest (3) to tension the shoulder belts (6) from a first position near an upper part to a second position near a lower part of the backrest (3), **characterized in that** the at least one pulley shaped element (24, 64) is linearly movable by means of a spindle (16), a toothed rack (37), a lift (39) or the like driven by means of a motor (20) like an electric motor (29).

2. A child vehicle seat (1, 61, 71) according to claim 1, **characterized in that** the seating part (4) of the seat (2) comprises a buckle (10), wherein the shoulder belts (6) are detachable connectable to the buckle (10), wherein the buckle (10) comprises a detector (11) to detect the connection of the shoulder belts (6) with the buckle (10) and to at least activate the motor (20) of the tensioning device (13, 63) when the shoulder belts (6) are connected with the buckle (10).

3. A child vehicle seat (1, 61, 71) according to claim 1 or 2, **characterized in that** the tensioning device (13, 63) comprises at least one detector (27, 28) to detect that the at least one pulley shaped element (24, 64) has reached an end position and to at least de-activate the motor (29) of the tensioning device (13, 63) when the end position has been reached.

4. A child vehicle seat (1, 61, 71) according to one of the preceding claims, **characterized in that** the tensioning device (13, 63) comprises a detector (23) to detect that a predetermined tension of the shoulder belts (6) has been achieved.

5. A child vehicle seat (1, 61, 71) according to claim 4, **characterized in that** the predetermined tension is determined by a deformable spring (22) being deformable to a certain predetermined level.

6. A child vehicle seat (1, 61, 71) according to claim 4 or 5, **characterized in that** when the predetermined tension of the shoulder belts (6) have been achieved, the motor (29) is de-activated.

7. A child vehicle seat (1, 61, 71) according to one of the preceding claims, **characterized in that** the tensioning device (63) comprises at least a first and a second movable pulley shaped element (24, 64) and at least one third pulley shaped element (65) having a fixed position with respect to the seat (2), wherein the shoulder belts (6) is guided along the first movable pulley shaped element (24), the third fixed pulley shaped element (65) and a second movable pulley shaped element (64).

8. A child vehicle seat (1, 61, 71) according to claim 7, **characterized in that** the first and the second movable pulley shaped elements (24, 64) are simultaneously movable.

9. A child vehicle seat (1, 61, 71) according to one of the preceding claims, **characterized in that** the seat (2) comprises a toothed rack (72) on the backrest (3) and a movable shoulder belt adjustment device (12, 75) comprising a pivotable spring loaded locking device (75, 76) being pivotable against spring (22, 77) force from an unlocked position to a locking position in the toothed rack (72) when a predetermined tension is applied on the shoulder belts (6).

10. A child vehicle seat (1, 61, 71) according to one of the preceding claims, **characterized in that** the at least one pulley shaped element (24, 64) is manually movable.
